# EUROPEAN PATENT APPLICATION

(11) **EP 2 418 440 A1**
(43) Date of publication of application: **15.02.2012**
(21) Application number: 11186382.5
(22) Date of filing: 12.12.2007
(51) Int. Cl.: F25B 31/00, F25B 49/02

(54) **Compressor oil return**

(30) Priority: 12.12.2006 US 609656
(62) Divisional of application: 07869131.8
(71) Applicant: American Power Conversion Corporation, West Kingston, RI 02892 (US)
(72) Inventor: Christensen, Ole Moelgaard, 6100 Haderslev (DK); Hylseback, Bo, 6040 Egtved (DK); Carlsen, Peter Ring, 9000 Aalborg (DK)
(74) Representative: Cooney, Daniel Thomas

(57) **Abstract**

A method includes operating a variable-speed compressor in a refrigeration system carrying a refrigerant-oil mixture at a varying compressor speed to provide cooling capacity in proportion to cooling demand on the refrigeration system, determining that increased oil return to the compressor compared to a current oil-return rate is desired, and increasing the speed of the compressor to be disproportionately high relative to the cooling demand to provide increased oil return to the compressor.

## Description

### CROSS-REFERENCE TO RELATED APPLICATION

This application claims benefit of priority from U.S. Patent Application 11/609,656, filed December 12, 2006, entitled "Variable Compressor Oil Return," which is hereby incorporated by reference as if fully set forth.

### BACKGROUND

It is often desirable to remove heat from air using a refrigeration system. For example, in a data center with many electronic components operating and generating heat, it is desirable to remove the heat from the data center to help prevent operational problems with the electronic components.

The amount of heat produced by the electronic equipment typically varies over time, e.g., with the amount of use of the equipment. Thus, variable-speed compressors may be used to help efficiently and cost effectively remove the heat. With oil mixed with refrigerant in a refrigeration system, the amount of oil returned to the compressor varies with the compressor speed. Proper design of oil return to the compressor is important to avoid issues such as excessive pressure loss in tubes of the refrigeration system, low efficiency of the refrigeration system, and low capacity of the refrigeration system. To help return oil to the compressor, tubes may be sized to help return oil during times of low compressor speed, a separate oil return system may be provided, an extra oil replenishing or holding system may be used, and/or compressor oil level may be manually checked and replenished. Such techniques may have associated issues such as high pressure loss , short lifespan of the compressor due to insufficient or excess oil return, high fabrication/installation cost, and/or high maintenance cost.

### SUMMARY

In general, in an aspect, the invention provides a refrigeration system including: a condenser configured to condense refrigerant in a refrigerant-oil mixture from first gas-phase refrigerant to first liquid-phase refrigerant; a pressure mechanism in liquid communication with the condenser and configured to receive the first liquid-phase refrigerant from the condenser and to reduce a pressure of the first liquid-phase refrigerant of the mixture to produce second liquid-phase refrigerant; an evaporator in liquid communication with the pressure mechanism and configured to receive the second liquid-phase refrigerant from the pressure mechanism and to transfer heat to the second liquid-phase refrigerant of the mixture to convert the second liquid-phase refrigerant to second gas-phase refrigerant; a compressor subsystem in liquid communication with the evaporator and the condenser and configured to receive the second gas-phase refrigerant from the evaporator and to compress the second gas-phase refrigerant vapor refrigerant of the mixture into the first gas-phase refrigerant and send the first gas-phase refrigerant toward the condenser; and a controller coupled to the compressor subsystem and configured to determine that an amount of oil available to the compressor subsystem is less than desired and to control the compressor subsystem to increase a speed of the compressor subsystem to cause more oil to be provided to the compressor subsystem such that the compressor subsystem has a desirable amount of oil available to the compressor subsystem.

Implementations of the invention may include one or more of the following features. The compressor subsystem includes a variable-speed compressor. The controller is configured to determine that the amount of oil available to the compressor subsystem is less than desired if the variable-speed compressor's speed is below a first speed threshold for longer than a first time threshold. The controller is configured to cause the variable-speed compressor to increase its speed if the variable-speed compressor's speed is below a second speed threshold for longer than a second time threshold, the second speed threshold being lower than the first speed threshold, the second time threshold being shorter than the first time threshold. The controller is configured to cause the variable-speed compressor to make its speed approximately 60% or higher of a maximum speed associated with the variable-speed compressor if the controller determines that the amount of oil available to the compressor subsystem is less than desired. The controller is configured to determine that the amount of oil available to the compressor subsystem is less than desired if an oil level at the variable-speed compressor is below a lower oil-level threshold. The controller is configured to cause the compressor to increase its speed until the oil level at the compressor reaches an upper oil-level threshold that is higher than the lower oil-level threshold. The compressor subsystem comprises a first compressor and a second compressor, the first compressor being a fixed-speed compressor, and wherein the controller is configured to cause the first compressor to operate if the controller determines that the amount of oil available to the compressor subsystem is less than desired and the first compressor is currently off.

In general, in another aspect, the invention provides a system including: a variable-speed compressor including an input configured to receive a refrigerant-oil mixture with the refrigerant being in gas phase and at a first pressure, the compressor including an output configured to transfer the refrigerant-oil mixture with the refrigerant being in gas phase and at a second pressure that is higher than the first pressure, the compressor being further configured to increase the pressure of the refrigerant received via the input from the first pressure to the second pressure and to supply the refrigerant-oil mixture with the refrigerant at the second pressure to the output; and a controller coupled to the compressor and configured to control the compressor to increase a speed of the compressor from a first speed to a second speed if the compressor speed has been below a first low-speed threshold for longer than a first time, the second speed being substantially faster than the first speed.

Implementations of the invention may include one or more of the following features. The second speed is at least about 60% of a maximum speed of the compressor. The second speed is at least about 90% of the maximum speed of the compressor. The second speed is about 100% of the maximum speed of the compressor and the controller is configured to control the compressor speed to be the second speed for a second time that is about 10% of the first time or less. The controller is configured to cause the compressor to increase its speed if the compressor speed is below a second low-speed threshold for longer than a third time threshold, the second speed threshold being lower than the first speed threshold, the third time threshold being shorter than the first time threshold. The second speed is about 100% of the maximum speed of the compressor and the second speed is about 10% of the third time or less.

In general, in another aspect, the invention provides a method including: operating a variable-speed compressor in a refrigeration system carrying a refrigerant-oil mixture at a varying compressor speed to provide cooling capacity in proportion to cooling demand on the refrigeration system; determining that increased oil return to the compressor compared to a current oil-return rate is desired; and increasing the speed of the compressor to be disproportionately high relative to the cooling demand to provide increased oil return to the compressor.

Implementations of the invention may include one or more of the following features. The method further includes returning the speed of the compressor to a speed proportionate to the cooling demand after increasing the speed of the compressor to be disproportionately high relative to the cooling demand has resulted in the compressor being desirably lubricated.

In accordance with implementations of the invention, one or more of the following capabilities may be provided. A variable speed compressor can be provided with appropriate amounts of returned oil. Proper amounts of oil may be returned to a compressor despite variations in compressor speed. Cooling efficiency of a variable-speed compressor refrigeration system may be improved. Proper amounts of oil may be returned to a variable-speed compressor refrigeration systems using different tube sizes. A variable-speed compressor refrigeration system can have a simple construction, low cost, and/or high compressor reliability.

These and other capabilities of the invention, along with the invention itself, will be more fully understood after a review of the following figures, detailed description, and claims.

### BRIEF DESCRIPTION OF THE FIGURES

FIG. 1 is a block diagram of a data center.
FIG. 2 is a block diagram of a refrigeration system shown in FIG. 1.
FIG. 3 is a block flow diagram of a process of altering a speed of a compressor shown in FIG. 2 to provide desired oil return to the compressor.
FIGS. 4-5 are block diagrams of other refrigeration systems.

### DETAILED DESCRIPTION OF PREFERRED EMBODIMENTS

Embodiments of the invention provide techniques for regulating oil return to a variable-speed compressor. For example, a controller can monitor a refrigeration system to determine and/or infer amounts of oil return to a variable-speed compressor. The controller can control the speed of the compressor to interrupt a period of relatively low speed with a period of relatively high speed as desired to increase the oil return to the compressor, and then return to a lower speed. The controller can repeat this as appropriate. This system is exemplary, however, and not limiting of the invention as other implementations in accordance with the disclosure are possible.

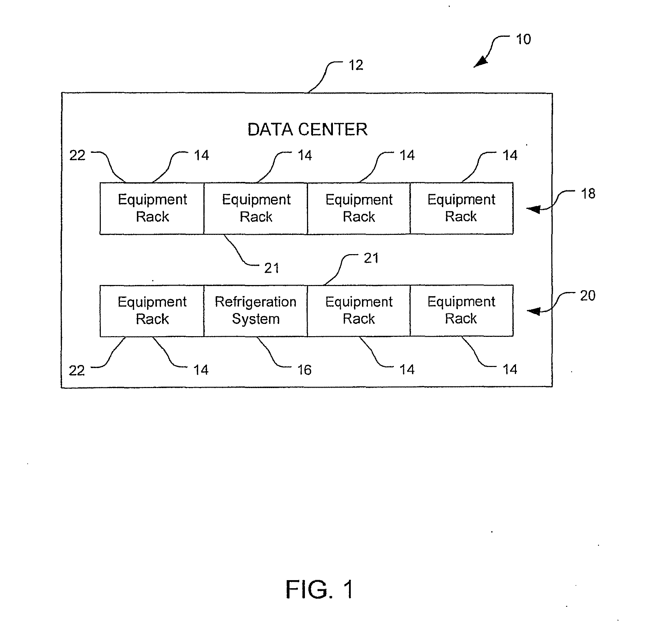

Referring to FIG. 1, a system 10 includes a data center 12 that includes equipment racks 14 and a refrigeration system 16. The racks 14 are, here, arranged in two rows 18, 20, although other configurations are possible. The equipment racks 14 contain electronic components such as servers or other information technology equipment. The electronic components produce heat that is expelled from backs 21 of the racks 14 between the rows 18, 20 and the refrigeration system 16 is configured to cool the hot air and provide cool air to fronts 22 of the racks 14.

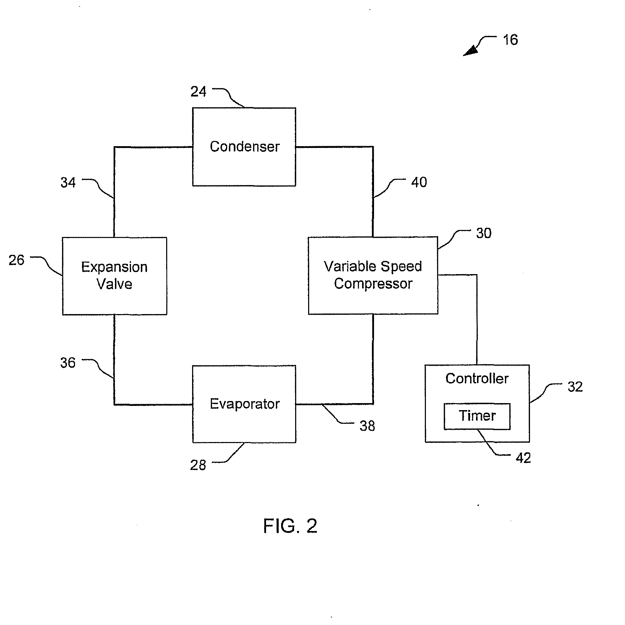

Referring to FIG. 2, the refrigeration system 16 includes a condenser 24, an expansion valve 26, an evaporator 28, a variable-speed compressor 30, and a controller 32. Not all of the components of the refrigeration system 16 may be contained in a rack. For example, the condenser 24 may be located outside of the rack, e.g., external to the data center 10 outside. The condenser 24, expansion valve 26, and evaporator 28 operate in typical fashion, and are not discussed here. Refrigerant lines 34, 36, 38, 40 contain and transport a refrigerant and oil mixture between the devices 24, 26, 28, 30. Here, the lines/tubes 34, 36, 38, 40 are configured for optimum oil return to the compressor 30 at 80% of maximum compressor speed, although other configurations may be used. The compressor 30 is configured to operate a different speeds to accommodate different cooling capacities as desired (e.g., during peak and off-peak hours of use of, and thus heat production by, the equipment in the racks 14). The compressor 30 is coupled to the controller 32 and configured to vary its speed in response to a control signal from the controller 32. The controller 32 is configured to increase and lower the speed of the compressor in accordance with cooling demand on the refrigeration system 16 by the racks 14.

The controller 32 is configured to regulate the speed of the compressor 30 to help ensure adequate oil return to the compressor 30. Here, the controller 32 includes a timer 42. The controller 32 is configured to monitor the speed of the compressor 30 and to actuate the timer 42 if the compressor speed reaches or drops below one or more threshold speeds. The timer 42 can track multiple times. Here, the controller 32 is configured to actuate the timer 42 to track amounts of time that the compressor speed drops below low-speed thresholds, e.g., 75 Hz and 50 Hz where a maximum speed is about 85 Hz. The controller 32 is configured to reset the corresponding times tracked by the timer 42 if the compressor speed exceeds 50 Hz or 75 Hz, respectively. The controller 32 is configured to send control signals to the compressor 30 to cause the compressor 30 to increase its speed if the timer 42 reaches a low-speed threshold time since the corresponding compressor speed dropped below the corresponding low-speed threshold. For example, the controller 32 can cause the compressor 30 to increase its speed to about 100% of its maximum speed if the speed has been below 50 Hz for more than 30 minutes, or below 75 Hz for more than 12 hours. The compressor 30 can have its speed increased to other percentages of the maximum speed, e.g., between about 60% and 100%. The controller 32 is configured to cause the compressor 30 to increase its speed to a desired speed that is substantially higher than the current speed and to actuate the timer 42 again. The controller 32 is configured to monitor the timer 42 and, in response to the timer reaching one or more increased-speed threshold times, to cause the compressor 30 to return to its previous speed or whatever speed is dictated by current demand on the refrigeration system 16. For example, the controller 32 can cause the compressor to run at 100% of its maximum speed for an increased-speed time before returning the compressor speed to a speed dictated by cooling demand. The increased-speed time is preferably less than about 10% of the threshold time for the compressor 30 to be running at a lowest speed threshold before triggering acceleration of the compressor speed, and preferably less than about 8% of this time, e.g., about 7% or two minutes for the example of a 30-minute time threshold for the lower speed threshold of 50 Hz. The increased-speed time is preferably longer if the speed to which the compressor 30 is increased is less than 100% of the maximum speed for the compressor. Thus, the controller 32 can cause the compressor to interrupt periods of relatively low speed with periods of relatively high speed, and then return to a relatively low speed to help ensure adequate oil return to the compressor 30 while providing efficient amounts of cooling corresponding to demands on the refrigeration system 16.

The controller 32 may take a variety of forms. For example, the controller 32 may provide digital or analog signals, or combinations of these, to the compressor 30. The controller 32 may comprise a mechanical device, a thermo-mechanical device, or combinations of these. The controller 32 may comprise a processor and memory that stores computer program code instructions that are readable and executable by the processor to perform functions as described here. Further, the controller 32 may comprise a combination of two or more of the techniques mentioned.

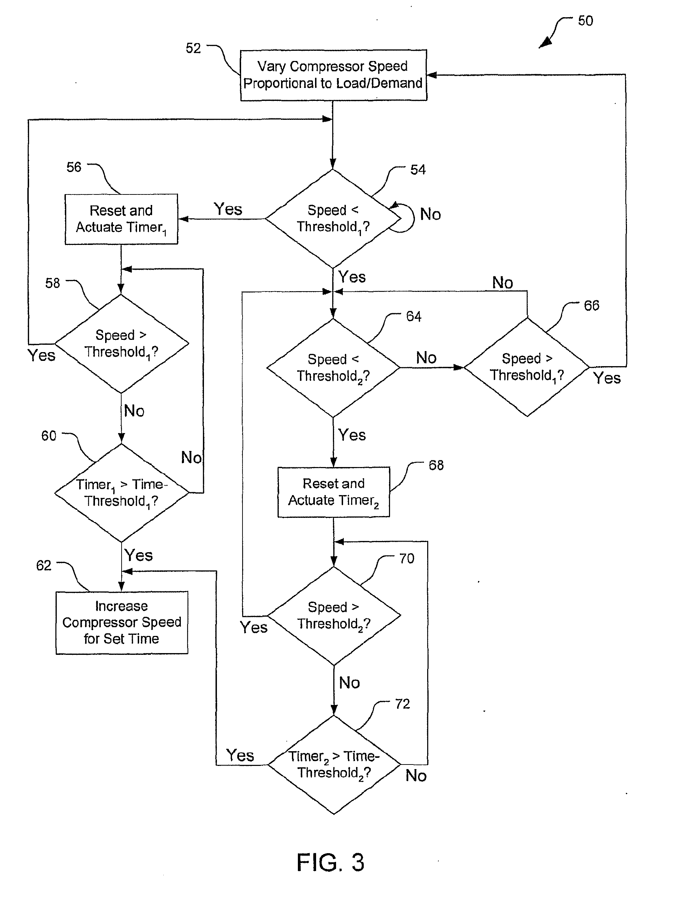

In operation, referring to FIG. 3, with further reference to FIGS. 1-2, a process 50 for cooling the data center 12 while helping to ensure adequate oil return to the compressor 30 includes the stages shown. The process 50, however, is exemplary only and not limiting. The process 50 may be altered, e.g., by having stages added, removed, or rearranged.

At stage 52, the controller 32 causes the compressor speed to vary in accordance with (proportional to) cooling demand on the refrigeration system 16. The controller 32 may receive indicia from various sources, e.g., air temperature sensors, refrigerant pressure sensors, etc. to determine the cooling demand on the system 16 and send control signals to the compressor 30 to vary its speed accordingly.

At stage 54, the controller 32 determines whether the compressor speed drops below a first low-speed threshold. For example, the first low-speed threshold may be 75 Hz. If the speed has not gone below the first low-speed threshold, then the controller 32 continues to monitor the compressor speed. If, however, the compressor speed decreases below the first low-speed threshold, then the process 50 proceeds to both stage 56 and stage 64.

At stage 56, the controller 32 resets and starts a first timer using the timer 42. The controller 32 causes the timer 42 to start a first timer for tracking an amount of time that the compressor 30 runs at a speed less than the first low-speed threshold.

At stage 58, an inquiry is made as to whether the compressor speed exceeds the first low-speed threshold. The controller 32 determines whether the compressor speed now exceeds the first low-speed threshold (e.g., by being increased at stage 62 via stage 72 as discussed below). If so, then the process returns to stage 54, and otherwise proceeds to stage 60.

At stage 60, the controller 32 determines whether the time indicated by the first timer exceeds a first time threshold associated with the first low-speed threshold. For example, the first time threshold may be 12 hours. If the first timer does not exceed the first time threshold, then the process 50 returns to stage 58, and otherwise proceeds to stage 62.

At stage 62, the compressor speed is increased. The controller 32 sends a control signal to the compressor 30 in response to which the compressor increases its speed, e.g., to 100% of its maximum speed. The controller 32 causes the compressor 30 to operate at this speed for a predetermined amount of time, e.g., two minutes.

At stage 64, with the compressor speed being below the first low-speed threshold, the controller 32 determines whether the compressor speed drops below a second, lower low-speed threshold. For example, the second low-speed threshold may be 50 Hz. If the speed has not gone below the second low-speed threshold, then the process 50 proceeds to stage 66. If, however, the compressor speed decreases below the second low-speed threshold, then the process 50 proceeds to stage 68.

At stage 66, the controller 32 determines whether the compressor speed exceeds the first low-speed threshold. If the compressor speed does not exceeded the first low-speed threshold, then the process 50 returns to stage 64, and otherwise returns to stage 52. For example, if the compressor speed is increased at stage 62, then the process returns from stage 66 to stage 52.

At stage 68, the controller 32 actuates a second timer. The controller 32 causes the timer 42 to actuate a second timer for tracking an amount of time that the compressor 30 runs at a speed less than the second low-speed threshold.

At stage 70, the controller 32 determines whether the compressor speed exceeds the second low-speed threshold. If the compressor speed exceeds the second low-speed threshold, then the process 50 returns to stage 64, and returns to stage 52 if the compressor speed exceeds the second low-speed threshold.

At stage 72, the controller 32 determines whether the time indicated by the second timer exceeds a second time threshold associated with the second low-speed threshold. For example, the second time threshold may be 30 minutes. If the second timer does not exceed the second time threshold, then the process 50 returns to stage 70, and otherwise proceeds to stage 62.

Other embodiments are within the scope and spirit of the invention. For example, due to the nature of software, functions described above can be implemented using software, hardware, firmware, hardwiring, or combinations of any of these. Features implementing functions may also be physically located at various positions, including being distributed such that portions of functions are implemented at different physical locations.

In exemplary embodiments of refrigeration systems, instead of different compressor speed thresholds and corresponding threshold times, the controller could monitor the compressor speed for an average compressor speed dropping below a threshold speed for a threshold time. For example, the controller is configured to reset its timer if the average compressor speed drops below a low-speed threshold and to send control signals to the compressor to cause the compressor to increase its speed if the timer reaches a low-speed threshold time since the average compressor speed exceeded the threshold speed. Alternatively, the controller could determine whether the average speed over different periods of time has not exceeded corresponding, different average speed values and cause the compressor to increase speed if the average speed violates any speed-time pair.

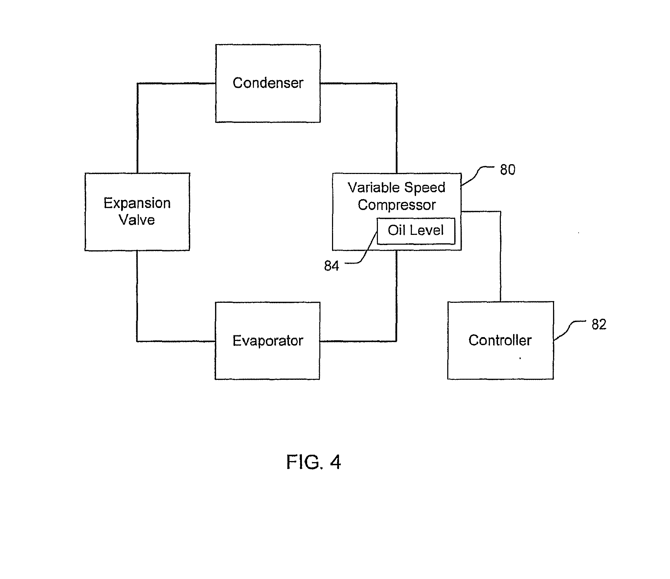

Referring to FIG. 4, a controller 82 is configured to monitor an oil level indicator 84 in a compressor 80. In accordance with a current oil level and a desired oil level, the controller 32 can send a control signal to increase its speed such that more oil is returned to the compressor 30. For example, if the compressor 30 runs at a low speed for a period of time, the oil level in the compressor 30 may drop. The controller 32 is configured to determine when a higher rate of oil return than the present rate is desired, e.g., when the oil level reaches or drops below a lower threshold level and to respond by signaling to the compressor 30 to increase its speed. The controller 32 may cause the compressor 30 to increase its speed to a desired speed for a desired amount of time. Alternatively, the controller 32 may cause the compressor 30 to increase its speed to a desired speed until the oil level reaches a higher threshold level (higher than the lower threshold level), at which time the controller 32 can cause the compressor 30 to return to its previous speed or whatever speed is dictated by current demand on the refrigeration system 16. Thus, the controller 32 can cause the compressor to interrupt periods of relatively low speed with periods of relatively high speed, and then return to a relatively low speed to help ensure adequate oil return to the compressor 30 while providing efficient amounts of cooling corresponding to demands on the refrigeration system 16.

As a further example, a controller could use a timer to periodically cause a compressor to operate at a high speed, regardless of the historical speed of the compressor. For example, the controller could cause the compressor to operate at its maximum speed for two minutes every 30 minutes. The speed and duration of the high-speed interval and the length of time between high-speed intervals are preferably selected to guard against foreseeable unacceptable oil return scenarios. In this example, the durations and speed are selected to equal the shorter time interval, corresponding to the compressor speed below 50 Hz, discussed above.

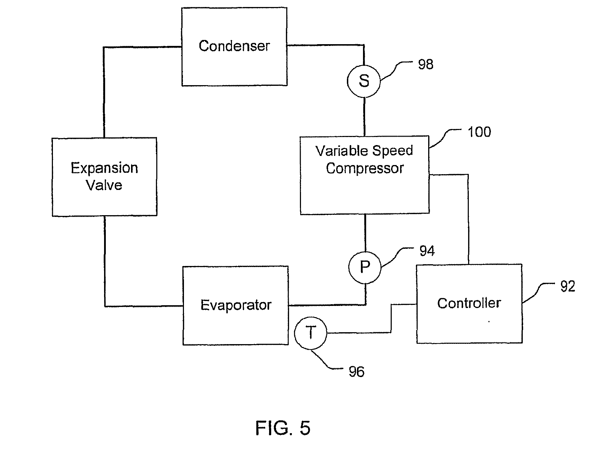

Further, a controller could monitor other properties and control a compressor accordingly. For example, referring to FIG. 5, a controller 92 can monitor a pressure sensor 94, a temperature sensor 96, and a gas speed sensor 98. The sensors 94, 96, 98 shown are exemplary only, and other sensors for detecting other characteristics, more of any of the types of sensors shown, and/or different locations for sensing system characteristics, may be used. In this example, the controller 92 can monitor pressure, temperature, and gas speed and determine when a compressor 100 should operate at a higher speed to guard against undesirably low oil return to the compressor 100. The controller 92 can control the compressor 100 to increase its speed as desired to boost oil return to the compressor 100 appropriately.

Further, combinations of techniques discussed above for determining when and how to control a compressor speed, and controlling the compressor speed, may be used.

Further still, the techniques described can be applied to various system configurations. For example, multiple variable speed compressors with a shared oil distribution (e.g., an oil leveling tube or the like) may have their speeds increased to help ensure adequate oil return for the compressors. A multiple compressor setup preferably would us an oil level control like in FIG. 4, where the controller gets feedback from an oil level sensor in the compressor. Two or more constant speed compressors with shared oil distribution (with an oil equalization tube) can be regulated to help ensure adequate oil return. For example, if a constant speed compressor is not running and oil return drops to an undesired level, then the compressor can be actuated to its constant speed to provide adequate oil return. Further, techniques described can be applied to systems with a compressor employing unloading to reduce compression capacity of the compressor. Techniques described may also be used with multi-compressor systems that employ unloading and that have shared oil distribution. Techniques described can also be applied to systems with a compressor with a hot gas bypass, multi-compressor systems with a hot gas bypass, unloading, and shared oil distribution, systems with a compressor with varying capacity, multi-compressor systems with varying capacity, unloading, and shared oil distribution, etc. Further combinations of these systems or other cooling devices may be used. Also, the techniques described can be applied to other systems not listed.

Also, while the description above refers to "the invention", more than one invention may be disclosed.

The claims of the parent application are reproduced in the clauses below on pages 11-14. These clauses define preferred embodiments. The applicant reserves the right to pursue protection for the combinations of features set out in these clauses, and/or for any other subject-matter contained in the parent application as filed, either in the present divisional application or in a further application divided from the present divisional application. The claims of the parent application are not the claims of this divisional application. The claims of the current divisional application are contained in a separate section on pages numbered 15-18 and headed "Claims".
1. A refrigeration system comprising: a condenser configured to condense refrigerant in a refrigerant-oil mixture from first gas-phase refrigerant to first liquid-phase refrigerant; a pressure mechanism in liquid communication with the condenser and configured to receive the first liquid-phase refrigerant from the condenser and to reduce a pressure of the first liquid-phase refrigerant of the mixture to produce second liquid-phase refrigerant; an evaporator in liquid communication with the pressure mechanism and configured to receive the second liquid-phase refrigerant from the pressure mechanism and to transfer heat to the second liquid-phase refrigerant of the mixture to convert the second liquid-phase refrigerant to second gas-phase refrigerant; a compressor subsystem in liquid communication with the evaporator and the condenser and configured to receive the second gas-phase refrigerant from the evaporator and to compress the second gas-phase refrigerant vapor refrigerant of the mixture into the first gas-phase refrigerant and send the first gas-phase refrigerant toward the condenser; and a controller coupled to the compressor subsystem and configured to determine that an amount of oil available to the compressor subsystem is less than desired and to control the compressor subsystem to increase a speed of the compressor subsystem to cause more oil to be provided to the compressor subsystem such that the compressor subsystem has a desirable amount of oil available to the compressor subsystem.
2. The system of claim 1 wherein the compressor subsystem comprises a variable-speed compressor.
3. The system of claim 2 wherein the controller is configured to determine that the amount of oil available to the compressor subsystem is less than desired if the variable-speed compressor's speed is below a first speed threshold for longer than a first time threshold.
4. The system of claim 3 wherein the controller is configured to cause the variable-speed compressor to increase its speed if the variable-speed compressor's speed is below a second speed threshold for longer than a second time threshold, the second speed threshold being lower than the first speed threshold, the second time threshold being shorter than the first time threshold.
5. The system of claim 2 wherein the controller is configured to cause the variable-speed compressor to make its speed approximately 60% or higher of a maximum speed associated with the variable-speed compressor if the controller determines that the amount of oil available to the compressor subsystem is less than desired.
6. The system of claim 2 wherein the controller is configured to determine that the amount of oil available to the compressor subsystem is less than desired if an oil level at the variable-speed compressor is below a lower oil-level threshold.
7. The system of claim 6 wherein the controller is configured to cause the compressor to increase its speed until the oil level at the compressor reaches an upper oil-level threshold that is higher than the lower oil-level threshold.
8. The system of claim 1 wherein the compressor subsystem comprises a first compressor and a second compressor, the first compressor being a fixed-speed compressor, and wherein the controller is configured to cause the first compressor to operate if the controller determines that the amount of oil available to the compressor subsystem is less than desired and the first compressor is currently off.
9. A system comprising: a variable-speed compressor including an input configured to receive a refrigerant-oil mixture with the refrigerant being in gas phase and at a first pressure, the compressor including an output configured to transfer the refrigerant-oil mixture with the refrigerant being in gas phase and at a second pressure that is higher than the first pressure, the compressor being further configured to increase the pressure of the refrigerant received via the input from the first pressure to the second pressure and to supply the refrigerant-oil mixture with the refrigerant at the second pressure to the output; and a controller coupled to the compressor and configured to control the compressor to increase a speed of the compressor from a first speed to a second speed if the compressor speed has been below a first low- speed threshold for longer than a first time, the second speed being substantially faster than the first speed.
10. The system of claim 9 wherein the second speed is at least about 60% of a maximum speed of the compressor.
11. The system of claim 10 wherein the second speed is at least about 90% of the maximum speed of the compressor.
12. The system of claim 11 wherein the second speed is about 100% of the maximum speed of the compressor and the controller is configured to control the compressor speed to be the second speed for a second time that is about 10% of the first time or less.
13. The system of claim 12 wherein the controller is configured to cause the compressor to increase its speed if the compressor speed is below a second low-speed threshold for longer than a third time threshold, the second speed threshold being lower than the first speed threshold, the third time threshold being shorter than the first time threshold.
14. The system of claim 13 wherein the second speed is about 100% of the maximum speed of the compressor and the second speed is about 10% of the third time or less.
15. A method comprising : operating a variable-speed compressor in a refrigeration system carrying a refrigerant-oil mixture at a varying compressor speed to provide cooling capacity in proportion to cooling demand on the refrigeration system; determining that increased oil return to the compressor compared to a current oil-return rate is desired; and increasing the speed of the compressor to be disproportionately high relative to the cooling demand to provide increased oil return to the compressor.
16. The method of claim 15 further comprising returning the speed of the compressor to a speed proportionate to the cooling demand after increasing the speed of the compressor to be disproportionately high relative to the cooling demand has resulted in the compressor being desirably lubricated.

## Claims

1. A refrigeration system (16) comprising:
a condenser (24) configured to condense refrigerant in a refrigerant-oil mixture from a first gas-phase refrigerant to a first liquid-phase refrigerant;
a pressure mechanism (26) in liquid communication with the condenser and configured to receive the first liquid-phase refrigerant from the condenser and to reduce a pressure of the first liquid-phase refrigerant of the mixture to produce second liquid-phase refrigerant;
an evaporator (28) in liquid communication with the pressure mechanism and configured to receive the second liquid-phase refrigerant from the pressure mechanism and to transfer heat to the second liquid-phase refrigerant of the mixture to convert the second liquid-phase refrigerant to second gas-phase refrigerant;
a compressor subsystem in liquid communication with the evaporator (28) and the condenser (24); and
a controller (32, 82, 92) coupled to the compressor subsystem;
**characterized in that**:
the compressor subsystem comprises a first fixed-speed compressor and at least one second compressor, and is configured to receive the second gas-phase refrigerant from the evaporator, to compress the second gas-phase refrigerant vapor refrigerant of the mixture into the first gas-phase refrigerant, and to send the first gas-phase refrigerant toward the condenser, and
the controller (32, 82, 92) is configured to determine whether an amount of oil available to the compressor subsystem is less than desired and, in response to a determination that the amount of available oil is less than desired and that the first fixed-speed compressor is off, to cause the first fixed-speed compressor to operate.

2. The system of claim 1, wherein the at least one second compressor includes a variable-speed compressor (30, 80, 100).

3. The system of claim 2, wherein the controller is configured to determine that the amount of oil available to the compressor subsystem is less than desired when the variable-speed compressor's speed is below a first speed threshold for longer than a first time threshold.

4. The system of claim 3, wherein the controller is further configured to cause the variable-speed compressor to increase its speed if the variable-speed compressor's speed is below a second speed threshold for longer than a second time threshold, the second speed threshold being lower than the first speed threshold, the second time threshold being shorter than the first time threshold.

5. The system of claim 2, wherein the controller is further configured to cause the variable-speed compressor to make its speed approximately 60% or higher of a maximum speed associated with the variable-speed compressor in response to a determination by the controller that the amount of oil available to the compressor subsystem is less than desired.

6. The system of claim 2, wherein the controller is further configured to determine that the amount of oil available to the compressor subsystem is less than desired if an oil level at the variable-speed compressor is below a lower oil-level threshold.

7. The system of claim 6, wherein the controller is further configured to cause the variable-speed compressor to increase its speed until the oil level at the variable-speed compressor reaches an upper oil-level threshold that is higher than the lower oil-level threshold.

8. A method comprising:
operating a compressor subsystem comprising a first fixed speed compressor and at least one second compressorin a refrigeration system (16) carrying a refrigerant-oil mixture to provide cooling capacity in proportion to cooling demand on the refrigeration system (16), **characterized in that** the method further comprises:
determining whether an amount of oil available to the compressor subsystem is less than desired; and
causing the first fixed-speed compressor of the compressor subsystem to operate to provide increased oil return to the compressor.

9. The method of claim 8, further comprising:
returning the speed of the compressor subsystem to a speed proportionate to the cooling demand after increasing the speed of the compressor to be disproportionately high relative to the cooling demand has resulted in the compressor being desirably lubricated.

10. The method of claim 8, wherein the at least one second compressor includes a variable-speed compressor (30, 80, 100), and wherein determining whether the amount of the oil available to the compressor is less than desired comprises:
determining whether the amount of oil available to the compressor subsystem is less than desired when the variable-speed compressor's speed is below a first speed threshold for longer than a first time threshold.

11. The method of claim 10, further comprising:
causing the variable-speed compressor to increase its speed if the variable-speed compressor's speed is below a second speed threshold for longer than a second time threshold, the second speed threshold being lower than the first speed threshold, the second time threshold being shorter than the first time threshold.

12. The method of claim 8, wherein the at least one second compressor includes a variable-speed compressor (30, 80, 100), and wherein determining whether the amount of the oil available to the compressor is less than desired comprises:
determining whether the amount of oil available to the compressor subsystem is less than desired if an oil level at the variable-speed compressor is below a lower oil-level threshold.

13. The method of claim 12, further comprising:
causing the variable speed compressor to increase its speed until the oil level at the compressor reaches an upper oil-level threshold that is higher than the lower oil-level threshold.
